# EUROPÄISCHE PATENTANMELDUNG

(11) **EP 0 690 527 A1**
(43) Veröffentlichungstag der Anmeldung: **03.01.1996**
(21) Anmeldenummer: 95109881.3
(22) Anmeldetag: 24.06.1995
(51) Int. Cl.: H01R 13/68

(54) **Anschlussvorrichtung**

(30) Priorität: 29.06.1994 DE 9410478 U
(71) Anmelder: KARL PFISTERER ELEKTROTECHNISCHE SPEZIALARTIKEL GMBH & CO. KG, D-70327 Stuttgart (DE)
(72) Erfinder: Ringering, Theo, D-82490 Farchant (DE)
(74) Vertreter: Patentanwälte Bartels, Held und Partner

(57) **Zusammenfassung**

Eine Anschlußvorrichtung zum zeitweiligen, einphasigen Verbinden wenigstens eines Kabels mit einem spannungführenden Leiter eines Energieversorgungsnetzes weist eine Verbindungseinrichtung (12, 15) zum Festhalten und Kontaktieren des Kabels sowie einen im Abstand von dieser Verbindungseinrichtung (12, 15) angeordneten Fingerkontakt (27) und zwei Kontaktkörper (19, 22) für die Aufnahme je eines der beiden Messerkontakte einer NH-Sicherung (20) auf, die mechanisch fest und elektrisch leitend mit dem einen Endabschnitt des Fingerkontaktes (27) bzw. der Verbindungseinrichtung (12, 15) verbunden sind. Die Längsachse einer in die beiden Kontaktkörper (19, 22) eingesetzten NH-Sicherung (20) schließt einen spitzen Winkel ein mit einer Verbindungslinie zwischen der Verbindungseinrichtung (12, 15) und dem mit dem einen Kontaktkörper (15) verbundenen Endabschnitt des Fingerkontaktes (27).

## Beschreibung

Die Erfindung betrifft eine Anschlußvorrichtung zum zeitweiligen, einphasigen Verbinden wenigstens eines Kabels mit einem spannungführenden Leiter eines Energieversorgungsnetzes, welche die Merkmale des Oberbegriffs des Anspruches 1 aufweist.

Derartige Anschlußvorrichtungen ermöglichen es, gefahrlos und in einfacher Weise ein Kabel an eine beispielsweise in einem Verteilerschrank angeordnete Verteilereinrichtung unter Spannung anzuschließen, auch wenn diese keinen freien Abgang mehr hat. Die Anschlußvorrichtung kann nämlich an das Kontaktmesser einer der NH-Sicherungen angeschlossen werden, mittels deren üblicherweise die Abgänge der Verteilereinrichtung abgesichert sind.

Da die bekannten Anschlußvorrichtungen der in Rede stehenden Art mit unterschiedlichen Mängeln behaftet sind, liegt der Erfindung die Aufgabe zugrunde, eine Anschlußvorrichtung der eingangs genannten Art zu schaffen, die es ermöglicht, allen Anforderungen gerecht zu werden. Diese Aufgabe löst eine Anschlußvorrichtung mit den Merkmalen des Anspruches 1.

Infolge der Schrägstellung der NH-Sicherung kann die Baulänge der Anschlußvorrichtung sehr gering gehalten werden, was in vielen Fällen Voraussetzung ist für die Einsatzmöglichkeit der Anschlußvorrichtung.

Grundsätzlich führt jede Schräglage der NH-Sicherung der Anschlußvorrichtung zu einer Verkürzung von deren Baulänge. Bei einer bevorzugten Ausführungsform ist jedoch der mit dem Endabschnitt des Fingerkontaktes verbundene Kontaktkörper zumindest annähernd auf der Verbindungslinie zwischen der Verbindungseinrichtung und dem genannten Endabschnitt des Fingerkontaktes angeordnet. Die Anschlußvorrichtung verjüngt sich dann gegen den Fingerkontakt hin.

Ferner ist ein Versatz des mit der Verbindungseinrichtung verbundenen Kontaktkörpers in jede Richtung, also auch zur Seite oder nach oben hin möglich. Voreilhaft ist jedoch ein Versatz nach unten hin, also gegen diejenige NH-Sicherung, an deren Messerkontakt die Anschlußvorrichtung angesetzt wird.

Bei einer bevorzugten Ausführungsform sind die Verbindungseinrichtung, die Kontaktkörper und die in sie eingesetzte NH-Sicherung in einem geschlossenen Gehäuse aus elektrisch isolierendem Material angeordnet. Alle spannungführenden Teile, mit Ausnahme des freiliegenden Abschnittes des Fingerkontaktes, sind durch das Gehäuse berührungssicher abgedeckt. Selbstverständlich kann auch der mit dem einen Kontaktkörper verbundene Endabschnitt des Fingerkontaktes im Inneren des Gehäuses angeordnet sein. Es braucht dann nur der aus dem Gehäuse herausragende Teil des Fingerkontaktes bis auf seine Kontaktflächen isoliert zu sein, um auch insofern eine Berührungssicherheit gewährleisten zu können.

Für die Handhabung der Anschlußvorrichtung kann man Nasen vorsehen, welche vorzugsweise über die Oberseite des Gehäuses überstehen und mit einem Betätigungsgriff gekuppelt werden können, wie er für NH-Sicherungen verwendet wird.

Besonders vorteilhaft ist ein Gehäuse, das auf seiner einen Seite mittels eines abnehmbaren Deckels verschlossen ist. Ein solcher Deckel erlaubt nicht nur einen guten Zugang zu der im Gehäuse angeordneten NH-Sicherung. Vor allem erlaubt ein guter Zugang zu dem Inneren des Gehäuses eine sehr einfache und kostengünstige Festlegung der Verbindungseinrichtung, der Kontaktkörper und des Fingerkontaktes an den Wänden des Gehäuses. Dies gilt vor allem dann, wenn die Festlegung mittels Schrauben erfolgt und deren über das Gehäuse nach außen überstehende Teile durch an die Gehäusewand angeformte Hülsen berührungssicher abgedeckt sind.

Der Deckel ist bei einer bevorzugten Ausführungsform mittels Schnappverschlüssen mit dem übrigen Teil des Gehäuses verbunden. Bei diesen Schnappverschlüssen kann es sich beispielsweise um federnde Zungen am Deckel handeln, die in je eine Öffnung der Wandfläche des übrigen Teils des Gehäuses eingreifen können. Sowohl der Deckel als auch der übrige Teil des Gehäuses können dann einstückig ausgebildete Formteile sein.

Im folgenden ist die Erfindung anhand eines in der Zeichnung dargestellten Ausführungsbeispiels im einzelnen erläutert. Es zeigen
- Fig. 1: eine Seitenansicht des Ausführungsbeispiels,
- Fig. 2: einen Längsschnitt,
- Fig. 3: eine Draufsicht auf die Oberseite des Ausführungsbeispiels,
- Fig. 4: eine Draufsicht auf die Rückseite des Ausführungsbeispiels,
- Fig. 5: eine Draufsicht auf die Vorderseite des Ausführungsbeispiels.

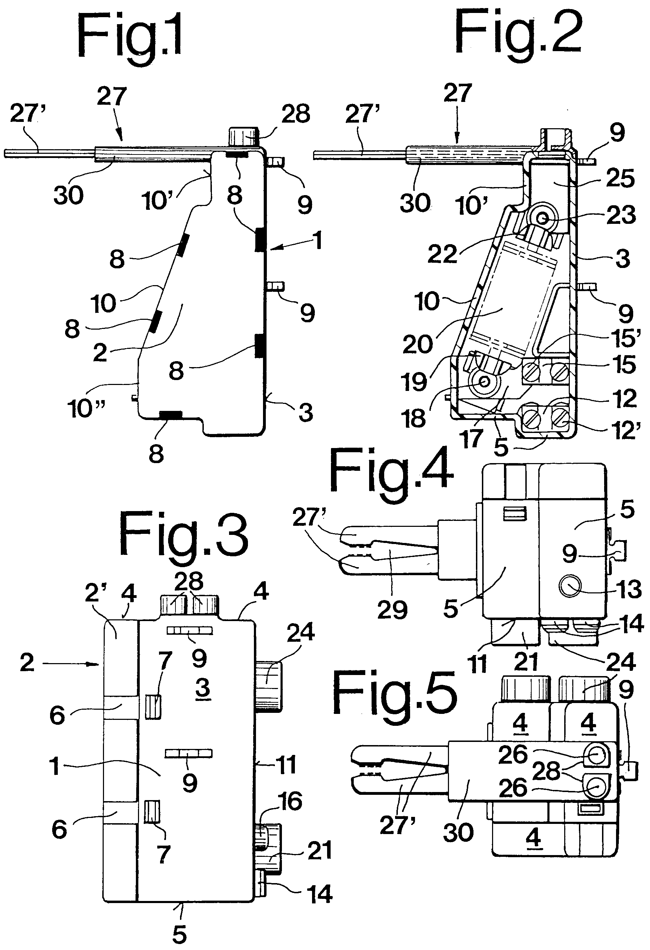

Eine Anschlußvorrichtung zum zeitweiligen, einphasigen Verbinden eines Kabels mit einem spannungführenden Leiter eines Energieversorgungsnetzes, insbesondere eines Leiters in Form einer Flachschiene, weist ein aus Kunststoff bestehendes, formstabiles Gehäuse 1 auf, dessen eine Seitenfläche vollständig durch einen abnehmbaren Deckel 2 gebildet ist, dessen hochgestellter Rand 2' auch einen Teil der Oberseite 3 des Gehäuses 1, seiner Vorderseite 4, seiner Rückseite 5 und seiner Unterseite 10 bildet. Über den hochgestellten Rand 2' überstehende, an den Deckel 2 angeformte, federnde Zungen 6 können in Öffnungen 7 des übrigen Teiles des Gehäuses 1 eingreifen. Sie bilden je einen Schnappverschluß. Die Lage dieser Schnappverschlüsse ist in Fig. 1 durch die schwarzen Rechtecke 8 dargestellt. Der Deckel 2 wird also sowohl mit der Oberseite 3 als auch der Vorderseite 4, der Rückseite 5 und der Unterseite 9 des Gehäuses 1 verbunden.

Über die Oberseite 4 des Gehäuses 1 ragen zwei mittig angeordnete Nasen 9 über, welche die bei NH-Sicherungen übliche Form haben und deshalb mittels eines Betätigungsgriffes erfaßt werden können, wie er für NH-Sicherungen benutzt wird. Die eine Nase 9 ist im Ausführungsbeispiel neben der Vorderseite 4, und die andere Nase 9 etwa in der Mitte zwischen der Vorderseite 4 und der Rückseite 5 angeordnet, wie insbesondere Fig. 3 zeigt.

Der Abstand der Unterseite 10 des Gehäuses 1 von dessen Oberseite 3 nimmt, abgesehen von einem unmittelbar an die Vorderseite 4 anschließenden Abschnitt 10', zur Rückseite 5 hin zu und verläuft in ihrem hinteren Endabschnitt 10'' parallel zur Oberseite 3. Hierdurch ist es möglich, im Gehäuse 1 eine genormte NH-Sicherung der Größe 00 parallel zur Unterseite 10 liegend anzuordnen.

Unmittelbar unterhalb der Oberseite 3 ist an der dem Deckel 2 gegenüberliegenden Seitenwand 11 und an die Rückseite 5 anschließend eine Verbindungseinrichtung festgelegt, die einen an die Rückseite 5 anschließenden ersten Klemmbügel 12 aufweist, der einen Klemmkanal für ein Kabel bildet, das durch eine mit diesem Klemmkanal fluchtende Öffnung 13 in der Rückseite 5 eingeführt werden kann. Der erste Klemmbügel 12 verbindet das isolierte Kabel mechanisch mit dem Gehäuse 1, dient also der Zugentlastung. Seine beiden Schrauben 12' sind durch Öffnungen in der Seitenwand 11 zugänglich, die mittels je eines herausnehmbaren Stopfens 14 verschlossen sind.

Gegenüber dem ersten Klemmbügel 12 zur Vorderseite 4 hin versetzt ist ein zweiter, gleich ausgebildeter Klemmbügel 15 an der Seitenwand 11 des Gehäuses 1 festgelegt, mittels dessen die Seele des Kabels kontaktiert wird. Durch an die Seitenwand 11 angeformte, nach außen überstehende Hülsen 16 sind die aussenliegenden Teile der Schrauben 15' des zweiten Klemmbügels 15 berührungssicher abgedeckt.

Von dem zweiten Klemmbügel 15 führt ein innen an der Seitenwand 11 anliegender Flachleiter 17 zur Unterseite 10 hin, wo im Abstand von der Unterseite 10 mittels einer Schraube 18 ein erster Kontaktkörper 19 festgelegt ist, der zwei zum Deckel hin sich erstreckende Kontaktfinger hat, welche den einen Messerkontakt einer NH-Sicherung 20 aufnehmen und kontaktieren. Der außerhalb der Seitenwand 11 liegende Teil der die Seitenwand 11 durchdringenden Schraube 18 ist durch eine angeformte Hülse 21 berührungssicher abgedeckt.

Ein wie der Kontaktkörper 19 ausgebildeter Kontaktkörper 22 ist am Übergang von dem parallel zur Oberseite 3 verlaufenden Abschnitt 10' der Unterseite 10 zu dem im Winkel zur Oberseite 4 verlaufenden Teil der Unterseite 10 an der Seitenwand 11 mittels einer Schraube 23 festgelegt, die die Seitenwand 10 durchdringt und außen durch eine an die Seitenwand 10 angeformte Hülse 24 berührungssicher abgedeckt ist. Der Kontaktkörper 22 nimmt den anderen Messerkontakt der NH-Sicherung 20 auf.

Vom zweiten Kontaktkörper 22 führt ein innen an der Seitenwand 11 anliegender Flachleiter 25 zur Vorderseite 4, wo er abgewinkelt ist und an der Vorderseite 4 anliegt. Mittels zweier Schrauben 26 sind hier der abgewinkelte Endabschnitt des Flachleiters 25 mit dem einen Ende eines Fingerkontaktes 27 mechanisch fest und elektrisch leitend verbunden. Die Schrauben 26, welche die Vorderseite 4 durchdringen, sind, soweit sie außerhalb des Gehäuses 1 liegen, durch zwei an die Vorderseite 4 angeformte Hülsen 28 berührungssicher abgedeckt.

Der geradlinige Fingerkontakt 27, der parallel zur Vorderseite 4 und damit im rechten Winkel zur Oberseite 3 des Gehäuses 1 verläuft, weist zwei durch einen Schlitz 29 voneinander getrennte und gegeneinander federnde Finger 27' auf, die auf einen elektrischen Leiter in Form einer Flachschiene, insbesondere das eine Kontaktmesser einer NH-Sicherung, aufgesteckt werden können. Mit Ausnahme des durch die Finger 27 gebildeten freien Endabschnittes ist der Fingerkontakt 27 von einer Isolierschicht 30 umgeben.

Wenn ein Kabel vorübergehend an ein Energieversorgungsnetz, insbesondere an eine der Stromkreisleisten in einem Verteilerschrank des Niederspannungs-Energieversorgungsnetzes angeschlossen werden soll, wird der Deckel 2 vom Gehäuse 1 abgenommen und das Kabelende mittels der ersten Klemmbrücke 12 sowie der zweiten Klemmbrücke 15 festgeklemmt. Danach wird das Gehäuse 1 wieder mit dem Deckel 2 verschlossen. Außerdem wird nun ein Sicherungs-Betätigungsgriff mit den beiden Nasen 9 gekuppelt. Nun kann der Fingerkontakt 27 gefahrlos auf das Kontaktmesser einer NH-Sicherung oder einen entsprechend ausgebildeten Leiter aufgesteckt werden. Das Kabel und der von diesem mit Energie versorgte Verbraucher sind dann über die NH-Sicherung 20 abgesichert. Nachdem die Verbindung mit dem Energieversorgungsnetz hergestellt ist, kann der Betätigungsgriff wieder gelöst werden.

## Patentansprüche

1. Anschlußvorrichtung zum zeitweiligen, einphasigen Verbinden wenigstens eines Kabels mit einem spannungführenden Leiter eines Energieversorgungsnetzes, mit einer Verbindungseinrichtung zum Festhalten und Kontaktieren des Kabels, einem im Abstand von dieser Verbindungseinrichtung angeordneten Fingerkontakt sowie zwei Kontaktkörpern für die Aufnahme je eines der beiden Messerkontakte einer NH-Sicherung, die mechanisch fest und elektrisch leitend mit dem einen Endabschnitt des Fingerkontaktes bzw. der Verbindungseinrichtung verbunden sind, dadurch gekennzeichnet, daß die Längsachse einer in die beiden Kontaktkörper (19, 22) eingesetzten NH-Sicherung (20) einen spitzen Winkel einschließt mit einer Verbindungslinie zwischen der Verbindungseinrichtung (12, 15) und dem mit dem einen Kontaktkörper (15) verbundenen Endabschnitt des Fingerkontaktes (27).

2. Anschlußvorrichtung nach Anspruch 1, dadurch gekennzeichnet, daß der mit dem Endabschnitt des Fingerkontaktes (27) verbundene Kontaktkörper (22) zumindest annähernd auf der Verbindungslinie liegt.

3. Anschlußvorrichtung nach Anspruch 2, dadurch gekennzeichnet, daß der mit der Verbindungseinrichtung (12, 15) verbundene Kontaktkörper (19) in derjenigen Richtung, in der sich der Fingerkontakt (27) von dem mit dem einen Kontaktkörper (22) verbundene Endabschnitt weg erstreckt, gegenüber der Verbindungseinrichtung (12, 15) versetzt angeordnet ist.

4. Anschlußvorrichtung nach einem der Ansprüche 1 bis 3, dadurch gekennzeichnet, daß die Verbindungseinrichtung (12, 15), die Kontaktkörper (19, 22) und die in sie eingesetzte NH-Sicherung (20) in einem geschlossenen Gehäuse (1, 2) aus elektrisch isolierendem Material angeordnet sind.

5. Anschlußvorrichtung nach Anspruch 4, dadurch gekennzeichnet, daß der mit dem einen Kontaktkörper (22) verbundene Endabschnitt des Fingerkontaktes (27) im Gehäuse (1, 2) angeordnet ist.

6. Anschlußvorrichtung nach Anspruch 4 oder 5, dadurch gekennzeichnet, daß über die Oberseite (3) des Gehäuses (1, 2) zwei Nasen (9) überstehen, die mit einem Betätigungsgriff für NH-Sicherungen kuppelbar sind.

7. Anschlußvorrichtung nach Anspruch 6, dadurch gekennzeichnet, daß das Gehäuse (1, 2) in der dem Fingerkontakt (27) abgekehrten hinteren Seite (5) mit einer Einführöffnung (13) für das Kabel versehen ist und die Verbindungseinrichtung (12, 15) nahe dieser hinteren Seite (5) im Gehäuse (1, 2) angeordnet ist.

8. Anschlußvorrichtung nach einem der Ansprüche 4 bis 7, dadurch gekennzeichnet, daß das Gehäuse (1, 2) auf seiner einen Seite mittels eines abnehmbaren Deckels (2) verschlossen ist.

9. Anschlußvorrichtung nach Anspruch 8, gekennzeichnet durch Schnappverschlüsse für die lösbare Verbindung des Deckels (2) mit dem übrigen Teil (1) des Gehäuses (1, 2).

10. Anschlußvorrichtung nach Anspruch 9, dadurch gekennzeichnet, daß die Schnappverschlüsse durch federnde Zungen (6) am Deckel (2) gebildet sind, die in Öffnungen (7) der Wandflächen des übrigen Teils (1) des Gehäuses (1, 2) eingreifen.

11. Anschlußvorrichtung nach einem der Ansprüche 4 bis 10, dadurch gekennzeichnet, daß der Fingerkontakt (27), die Verbindungseinrichtung (12, 15) und die Kontaktkörper (19,22) mittels Schrauben mit dem Gehäuse (1, 2) verbunden sind, welche die Gehäusewand (11) durchdringen, an welche konzentrisch zu den Durchtrittsöffnungen für die Schrauben je eine nach außen vorspringende Schutzhülse (16, 21, 24, 28) angeformt ist.
